# EUROPEAN PATENT APPLICATION

(11) **EP 4 627 911 A1**
(43) Date of publication of application: **08.10.2025**
(21) Application number: 25166797.8
(22) Date of filing: 27.03.2025
(51) Int. Cl.: A01K 1/02, A01K 1/035, E04H 17/00, E04H 17/24

(54) **AN EXTENDER FOR A BARRIER PORTION OF A BRACKET, A BRACKET ASSEMBLY, AND AN ANIMAL CONTAINMENT SYSTEM**

(30) Priority: 04.04.2024 GB 202404807
(71) Applicant: Protectapet Limited, Alsager Stoke-on-Trent Staffordshire ST7 2EW (GB)
(72) Inventor: DAVIES, Simon, Stoke-on-Trent, ST7 2EW (GB)
(74) Representative: Swindell & Pearson Limited

(57) **Abstract**

An extender (100) for a barrier portion (202) of a bracket (200), the bracket (200) comprising a mounting portion (201) and the barrier portion (202), the barrier portion (202) being inclined relative to the mounting portion (201), wherein the extender (100) comprises an elongate planar face (101) having a length measured in a first direction (x) and a width measured in a second direction (y) perpendicular to the first direction (x), wherein the elongate planar face (101) has a perimeter having two opposing long edges and two opposing short edges; a wall (102), upstanding from the planar face (101) in a third direction (z) perpendicular to the first direction (x) and the second direction (y), extending along the two long edges and one of the two short edges, wherein the wall (102) has a perimeter having two opposing long edges and one short edge; first constraints (104) comprising a plurality of tabs which extend from the long edges of the wall (102) parallel to the elongate planar face (101); and a second constraint (105) comprising a tab which extends from the planar face (101) in the third direction (z), wherein the two opposing long edges of the wall (102), the planar face (101) and the first constraints (104) are mutually arranged to slidingly receive and constrain the barrier portion (202) of the bracket (200) between the two opposing long edges of the wall (102), the planar face (101) and the first constraints (104), and wherein the second constraint (105) is positioned to abut an end of the barrier portion (202), distal from the mounting portion (201) when the barrier portion (202) is slidingly received between the two opposing long edges of the wall (102), the planar face (101) and the first constraints (104), wherein a portion of the planar face (101) extends beyond the end of the barrier portion (202).

## Description

### TECHNOLOGICAL FIELD

Examples of the disclosure relate to an extender for a barrier portion of a bracket, a bracket assembly and an animal containment system. Some relate to an extender for a barrier portion of a bracket, a bracket assembly and an animal containment system for the containment of domestic pets.

### BACKGROUND

Many domestic animals require access to an outdoor enclosure such as a garden, however it is often possible for a domestic animal to leave an outdoor enclosure by climbing over a boundary. Some outdoor enclosures are positioned near to hazards such as busy roads and train lines which present dangers to the health of a domestic animal. Further, some domestic animals carry communicable diseases which should not be passed on to other domestic animals.

Overhanging bracket assemblies are often required at the top of an enclosure, such as a fence or wall, to prevent animals climbing over the enclosure. Examples of this disclosure relate to improvements in and relating to such bracket assemblies as well as parts for forming such bracket assemblies.

### BRIEF SUMMARY

According to various, but not necessarily all, examples there is provided an extender for a barrier portion of a bracket, the bracket comprising a mounting portion and the barrier portion, the barrier portion being inclined relative to the mounting portion, wherein the extender comprises: an elongate planar face having a length measured in a first direction and a width measured in a second direction perpendicular to the first direction, wherein the elongate planar face has a perimeter having two opposing long edges and two opposing short edges; a wall, upstanding from the planar face in a third direction perpendicular to the first direction and the second direction, extending along the two long edges and one of the two short edges, wherein the wall has a perimeter having two opposing long edges and one short edge; first constraints comprising a plurality of tabs which extend from the long edges of the wall parallel to the elongate planar face; and a second constraint comprising a tab which extends from the planar face in the third direction, wherein the two opposing long edges of the wall, the planar face and the first constraints are mutually arranged to slidingly receive and constrain the barrier portion between the two opposing long edges of the wall, the planar face and the first constraints, and wherein the second constraint is positioned to abut an end of the barrier portion, distal from the mounting portion when the barrier portion is slidingly received between the two opposing long edges of the wall, the planar face and the first constraints, wherein a portion of the planar face extends beyond the end of the barrier portion.

In some but not necessarily all examples, the extender is formed from folded steel sheet.

According to various, but not necessarily all, examples there is provided a bracket assembly comprising the extender and a bracket, wherein the bracket comprises a mounting portion and a barrier portion, the barrier portion being inclined relative to the mounting portion.

In some but not necessarily all examples, the bracket is configured to be attached to an upright or to an engagement face of an alignment adaptor.

In some but not necessarily all examples, the bracket comprises an elongate member.

In some but not necessarily all examples, the mounting portion and the barrier portion are formed as a single part.

In some but not necessarily all examples, the mounting portion comprises attachment holes through which fastening means can extend, the attachment holes positioned on a centre line of the mounting portion.

In some but not necessarily all examples, the barrier portion of the bracket comprises: a middle section extending from the mounting portion in a direction away from the upright or the engagement face; and an outer section extending from the middle section in a direction substantially perpendicular to the upright or the engagement face, such that the outer section is slidingly locatable between the wall, the planar face and the first attachment means of the extender and an end of the outer section, distal from the middle section, engages the second attachment means of the extender.

In some but not necessarily all examples, the bracket is formed from steel coil.

In some but not necessarily all examples, at least one of the extender or the bracket has a thermoplastic coating.

In some but not necessarily all examples, the thermoplastic coating is PPA.

In some but not necessarily all examples, the bracket assembly further comprises an alignment adaptor, wherein: the alignment adaptor comprises a mounting surface engageable against a surface of an upright and a flat engagement face inclined relative to the mounting surface; and the bracket is configured to be attached to the engagement face of the alignment adaptor, such that the mounting portion is inclined relative to the fence post surface, rotationally about a vertical axis, the angle of rotation being in the plane perpendicular to the vertical axis.

In some but not necessarily all examples, the upright is a fence post or wall.

According to various, but not necessarily all, examples, there is provided an animal containment system comprising at least two bracket assemblies.

In some but not necessarily all examples, the respective bracket assemblies are configured to be attached to respective peripheral uprights of an enclosure.

In some but not necessarily all examples, the animal containment system further comprises barrier means extending between the respective extenders.

In some but not necessarily all examples, the extenders comprise third attachment means for attaching the barrier means.

In some but not necessarily all examples, the barrier means extend beyond at least one of the at least two bracket assemblies.

In some but not necessarily all examples, the barrier means comprises a mesh.

According to various, but not necessarily all, embodiments there is provided an apparatus comprising means for performing at least part of one or more methods described herein. The description of a function and/or action should additionally be considered to also disclose any means suitable for performing that function and/or action. Functions and/or actions described herein can be performed in any suitable way using any suitable method.

According to various, but not necessarily all, embodiments there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all the features described in respect of other examples of the disclosure, and vice versa. Also, it is to be appreciated that any one or more or all the features, in any combination, may be implemented by/comprised in/performable by an apparatus, a method, and/or computer program instructions as desired, and as appropriate. The description of a function should additionally be considered to also disclose any means suitable for performing that function

### BRIEF DESCRIPTION

Some examples will now be described with reference to the accompanying drawings in which:
FIG. 1 illustrates an example extender for a barrier portion of a bracket;
FIG. 2 illustrates an example extender for a barrier portion of a bracket;
FIG. 3 illustrates an example extender for a barrier portion of a bracket;
FIG. 4 illustrates an example of a bracket assembly;
FIG. 5 illustrates an example of a bracket assembly;
FIG. 6 illustrates an example of a bracket assembly;
FIG. 7 illustrates an example of a bracket assembly;
FIG. 8 illustrates an example of an animal containment system;
FIG. 9 illustrates an example of an animal containment system;
FIG. 10 illustrates an example of an animal containment system;
FIG. 11 illustrates an example of an animal containment system;
FIG. 12 illustrates an example of an animal containment system; and
FIG. 13 illustrates an example of an animal containment system.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DETAILED DESCRIPTION

The following description and the enclosed Figures relate to various examples of an extender 100 for a barrier portion of a bracket 200, the bracket 200 comprising a mounting portion 201 and a barrier portion 202, the barrier portion 202 being inclined relative to the mounting portion 201 wherein the extender 100 comprises an elongate planar face 101 having a length measured in a first direction x and a width measured in a second direction y perpendicular to the first direction x wherein the elongate planar face 101 has a perimeter having two opposing long edges and two opposing short edges, a wall 102 upstanding from the planar face 101 in a third direction z perpendicular to the first direction x and the second direction y, extending along the two long edges and one of the two short edges wherein the wall 102 has a perimeter having two opposing long edges and one short edge, first constraints 104 comprising a plurality of tabs which extend from the long edges of the wall 102 parallel to the elongate planar face 101 and a second constraint 105 comprising a tab which extends from the planar face 101 in the third direction z, wherein the two opposing long edges of the wall 102, the planar face 101 and the first constraints 104 are mutually arranged to slidingly receive and constrain the barrier portion 202 between the two opposing long edges of the wall 102, the planar face 101 and the first constraints 104 and wherein the second constraint 105 is positioned to abut an end of the barrier portion 202 distal from the mounting portion 201 when the barrier portion 202 is slidingly received between the two opposing long edges of the wall 102, the planar face 101 and the first constraints 104, and wherein a portion 106 of the planar face101 extends beyond the end of the barrier portion 202.

By providing the extender 100 on the bracket 200, the bracket 200 is adapted for use in a range of positions and locations within an animal containment system. Providing the extender 100 therefore provides a modular animal containment system in which a single type of bracket may be used and adapted as necessary.

The extender 100 is configured to extend a barrier portion 202 of a bracket 200 comprising a mounting portion 201 and a barrier portion 202. The barrier portion 202 of the bracket 200 is inclined relative to the mounting portion 201. The extender 100 is configured to extend the barrier portion 202 from an end distal the mounting portion 201.

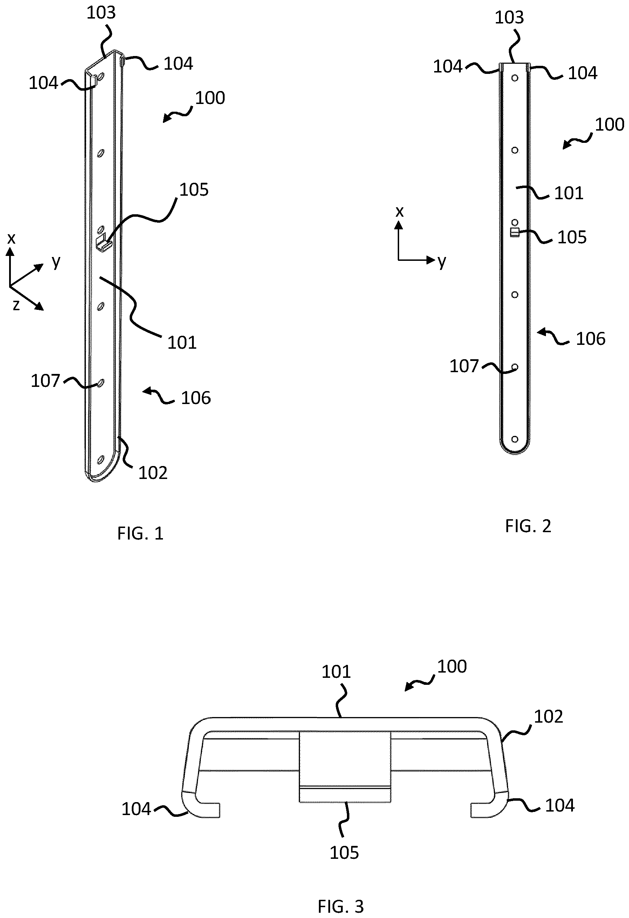

FIGs 1 to 3 illustrate perspective, front and top views of the extender 100 respectively.

As illustrated in FIGs 1 to 3, the extender 100 comprises an elongate planar face 101. The length of the elongate planar face 101 is measured in a first direction x and the width of the elongate planar face 101 is measured in a second direction y.

The elongate planar face 101 has a perimeter having two opposing long edges and two opposing short edges. In some but not necessarily all examples the perimeter of the elongate planar face 101 is rectangular or substantially rectangular.

The two opposing long edges extend along or parallel to the first direction x. In some but not necessarily all examples the two long edges are straight or substantially straight.

The two short edges extend along or parallel to the second direction y. In some but not necessarily all examples a first short edge of the two short edges is straight or substantially straight and a second short edge of the two short edges is curved.

Both the long edges are connected to both the short edges to provide a continuous perimeter.

In some but not necessarily all examples the elongate planar face 101 comprises attachment means 107 for attaching a barrier means 301 to the extender 100. In some such examples the attachment means 107 comprise one or more through holes.

In some examples the through holes are positioned along a center line of the elongate planar face 101, the center line being parallel to the first direction x. In examples in which the attachment means 107 comprise a plurality of through holes, the through holes are positioned at regular intervals along the center line of the elongate planar face 101.

The extender 100 comprises a wall 102 upstanding from the planar face 101 in a third direction z perpendicular to the first direction x and the second direction y. The wall 102 upstands from the two long edges and one of the two short edges. The wall 102 does not upstand from the other of the two short edges. There is therefore an opening in the wall 102 into which the barrier portion 202 of the bracket 200 may be slid. In examples in which the first short edge is straight and the second short edge is curved, the wall 102 upstands from the second (curved) short edge and does not upstand from the first (straight) short edge.

The wall 102 therefore has a perimeter having two opposing long edges and one short edge. The short edge is connected to both the long edges. In examples the perimeter of the wall 102 has two opposing long edges that are substantially straight and a short edge that is a curved edge.

The extender 100 comprises first constraints 104. The first constraints 104 comprise a plurality of tabs. In some but not necessarily all examples the first constraints 104 comprise two tabs.

The first constraints 104 extend from the long edges of the wall 102 parallel to the elongate planar face 101. The first constraints 104 are positioned on corresponding parts of the opposing long edges of the wall 102 such that each first constraint has an opposing first constraint. The first constraints 104 extend inwards from the edge of the wall 102 towards each other such that they overlie the elongate planar face 101.

In examples the first constraints 104 are positioned at an end of the wall 102 proximal to the opening of the wall 102.

The extender 100 comprises a second constraint 105. The second constraint 105 comprises a tab which extends from the elongate planar face 101 in the third direction z. In examples the tab comprises a first part extending in the third direction z and a second part extending in the first direction x.

The second constraint 105 extends from a second constraint position on the elongate planar face 101. The second constraint position is distal from the short edges of the elongate planar face 101 such that a portion 106 of the elongate planar face 101 extends to either side of the second constraint position. In examples the second constraint position is midway or substantially midway between the short edges. In other examples the second constraint position is a third of the way between the two short edges. In other examples the second constraint position is a different distance from one of the straight edges. In some examples, the second constraint position is closer to the short edge from which the wall 102 does not upstand than to the short edge from which the wall 102 upstands.

There is therefore provided an extender 100 for a barrier portion 202 of a bracket 200 wherein the two opposing long edges of the wall 102, the planar face 101 and the first constraint are mutually arranged to slidingly receive and constrain the barrier portion 202 between the two opposing long edges of the wall 102, the planar face 101 and the first constraints 204. The wall 102, the planar face 101 and the first constraints 204 are mutually arranged to receive the barrier portion 202 in the opening of the wall 102.

The barrier portion 202 may be slidingly locatable within the two opposition long edges of the wall 102, the planar face 101 and the first constraints 204 via a clearance fit, a transition fit or an interference fit.

The second constraint 105 is positioned to abut an end of the barrier portion 202 distal from the mounting portion 201 when the barrier portion 202 is slidingly received between the two opposing long edges of the wall 102, the planar face 101 and the first constraints 104. When the second constraint 105 abuts the edge of the barrier portion 202, a portion 106 of the elongate planar face 101 extends beyond the end of the barrier portion 202. The extender 100 thus extends the barrier portion 202.

In examples the extender 100 comprises steel. In some such examples the extender 100 is formed from folded steel sheet.

In examples at least a portion of the extender 100 has a thermoplastic coating. In some such examples the thermoplastic coating comprises polyphthalamide (PPA).

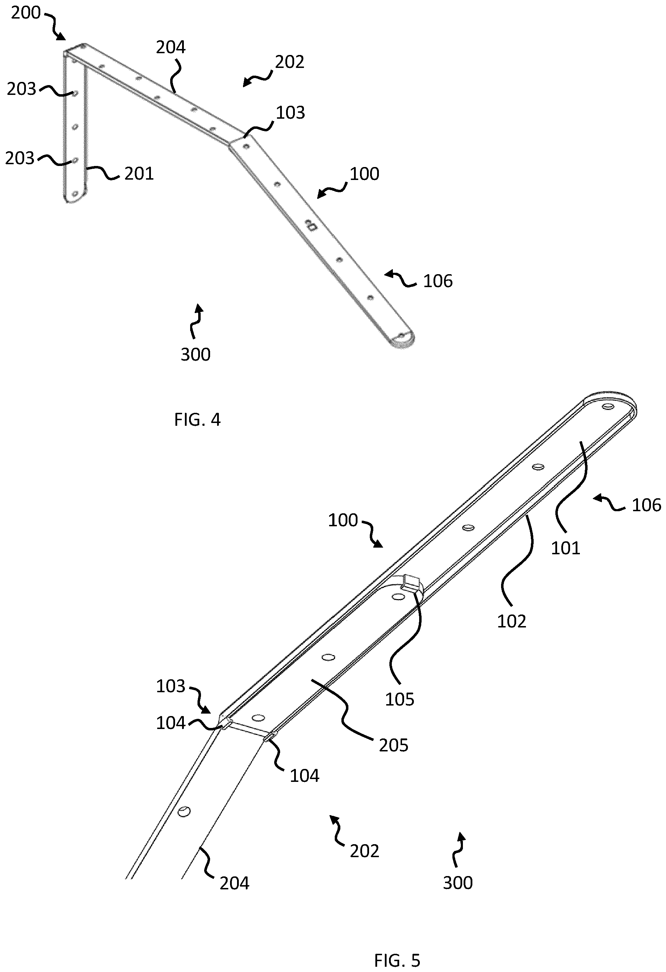

FIGs 4 and 5 illustrate a bracket assembly 300 comprising an extender 100 as described above and a bracket 200. The bracket 200 comprises a mounting portion 201 and a barrier portion 202, the barrier portion 202 being inclined relative to the mounting portion 201.

The barrier portion 202 is configured to be slidingly locatable between the two opposing long edges of the wall 102 of the extender 100, the elongate planar face 101 of the extender 100 and the first constraints 104 of the extender 100.

The bracket 200 is configured such that, when the barrier portion 202 is slidingly received between the two opposing long edges of the wall 102 of the extender 100, the elongate planar face 101 of the extender 100 and the first constraints 104 of the extender 100, an end of the barrier portion 202, distal from the mounting portion 201, abuts the second constraint 105.

In examples the bracket 200 comprises an elongate member. In some such examples the mounting portion 201 and the barrier portion 202 are formed from a single part by folding a planar elongate member. Thus in some examples the mounting portion 201 is a planar elongate member and the barrier portion 202 is a planar elongate member.

In examples the mounting portion 201 of the bracket 200 is configured to be attached to an upright or an engagement face 402 of an alignment adaptor 400. The upright may be any upright on a perimeter of an enclosure or partial enclosure, for example a fence, fence post or wall.

In some examples the mounting portion 201 comprises attachment holes 203 through which fastening means can extend. The attachment holes 203 are through holes. In some examples the attachment holes 203 are positioned along a center line of the mounting portion 201 extending parallel to an elongate edge of the mounting portion 201.

The mounting portion 201 is configured to be attached to an upright or an engagement face 402 of an alignment adaptor 400 such that the barrier portion 202 extends away from the upright or the engagement face 402.

In examples the barrier portion 202 comprises attachment means for attaching a barrier means 301 to the barrier portion 202. In some examples the attachment means comprise one or more through holes. In some examples the through holes are positioned along a center line extending parallel to an elongate edge of the barrier portion 202.

In some examples through holes are positioned such that, when the barrier portion 202 is slidingly received between the two opposing edges of the wall 102 of the extender 100, the planar face 101 of the extender 100 and the first constraints 104 of the extender 100 and abuts the second constraint 105, the through holes of the extender 100 and the through holes of the barrier portion 202 align such that fastening means may extend through the through holes of the extender 100 and the through holes of the barrier portion 202.

In some examples the barrier portion 202 of the bracket 200 comprises a middle section 204 extending from the mounting portion 201 in a direction away from the upright of the engagement face 402 and an outer section 205 extending from the middle section 204 in a direction substantially perpendicular to the upright of the engagement face 402. In such examples the outer section 205 is configured to be slidingly locatable between the two opposing long edges of the wall 102, the planar face 101 and the first constraints 104 of the extender 100, and an end of the outer section 205 distal from the middle section 204 is configured to engage the extender 100. It will be appreciated that for such examples any reference to the barrier portion 202 may be interpreted as reference to the outer section 205 of the barrier portion 202.

In examples the bracket 200 comprises steel. In some such examples the bracket 200 is formed from steel coil.

In examples at least a portion of the bracket 200 has a thermoplastic coating. In some such examples the thermoplastic coating comprises PPA.

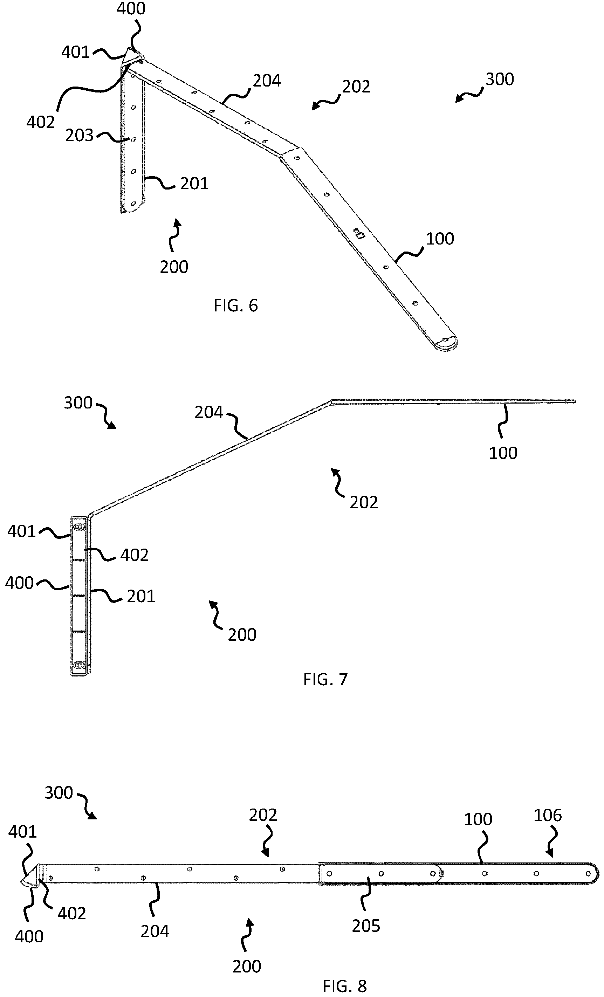

FIGs 6 to 8 illustrate a bracket assembly 300 comprising the bracket 200 and the extender 100 as described above and an alignment adaptor 400.

The alignment adaptor 400 comprises a mounting surface 401 engageable against a surface of an upright and a flat engagement face 402 inclined relative to the mounting surface 401.

The alignment adaptor 400 is configured to be attached to an upright such that the mounting surface 401 is engaged against a surface of the upright.

In the examples of FIGs 6 to 8 the bracket 200 is configured to be attached to the engagement face 402 of the alignment adaptor 400 such that, when the alignment adaptor 400 is attached to a surface of an upright, the mounting portion 201 is inclined relative to the surface of the upright rotationally about a vertical axis, the angle of rotation being in the plane perpendicular to the vertical axis.

The bracket 200 may therefore be mounted to an upright via the alignment adaptor 400.

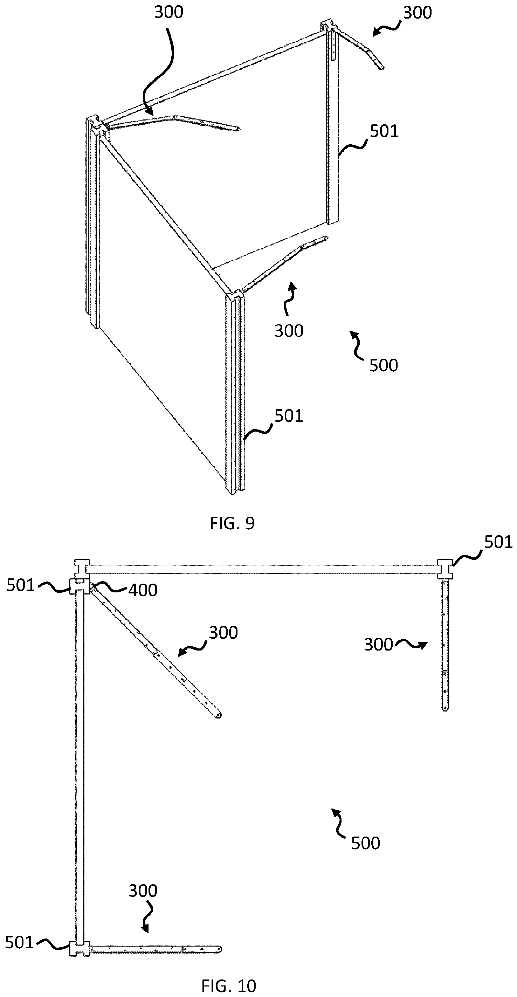

FIGs 9 to 13 illustrate various examples of an animal containment system 500. The animal containment system 500 comprises at least two bracket assemblies 300 as discussed above.

As can be seen in the examples of FIGs 9 and 10, the respective bracket assemblies 300 are configured to be attached to respective peripheral uprights of an enclosure such that they extend over the enclosure away from the respective peripheral uprights.

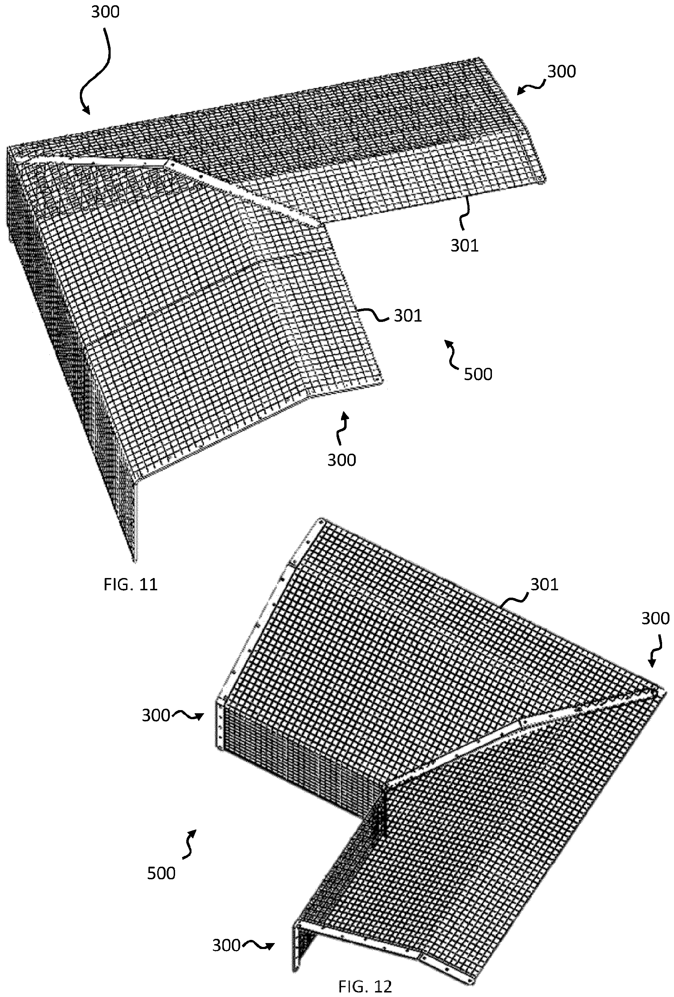

In some examples, such as the examples illustrated in FIGs 11 to 13, the animal containment system 500 further comprises barrier means 301 extending between the respective extenders 100. In some examples the barrier means 301 also extends between the respective barrier portions 202.

The barrier means 301 may be attached to the extender 100 and, optionally, to the barrier portion 202, by fastening means which extend through the attachment means 107 of the extender 100 and, optionally, of the barrier portion 202. In some examples the barrier means 301 extend beyond one or more of the barrier assemblies.

In examples the barrier means 301 comprises a mesh.

The bracket assembly provides strength, structure and support to the barrier means. Therefore, the length and position of the bracket assembly determines the areas of an enclosure to which the barrier means may extend.

Thus, the extender, optionally in combination with the alignment adaptor, enables a standardized bracket to be used to provide strength, structure and support to barrier means of various shapes, sizes and positions by changing the length and position of the bracket.

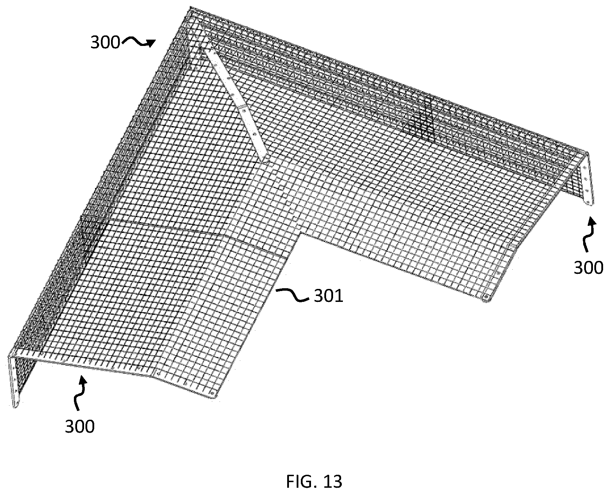

In examples, a bracket which extends to an edge of the barrier means provides improved strength, structure and support to the barrier means than a bracket which does not extend to an edge of the barrier means. For example, FIG 13 illustrates an animal containment system in which one of the bracket assemblies does not extend to an edge of the barrier means. FIGs 11 and 12 illustrate animal containment systems in which all bracket assemblies extend to an edge of the barrier means. The bracket assemblies of FIGs 11 and 12 therefore provide superior strength, structure and support to the barrier means than the bracket assembly of FIG 13, thus providing a more secure animal containment system.

By extending the bracket using an extender, the resulting bracket assembly provides improved strength, support and structure to a longer or wider barrier means than an unextended bracket. By extending the bracket using an extender and rotating the bracket using an alignment adaptor, the resulting bracket assembly may provide improved strength, support and structure to angles, corners, or other features of shape of a barrier means than an unextended bracket.

A standardized bracket attached directly to an upright may therefore be extended to provide improved support for a barrier means.

A standardized bracket attached to an upright via an alignment adaptor may therefore be extended to provide support for a barrier means from both internal and external corners of the enclosure, by both extending and rotating the bracket.

An internal corner of the barrier means may require a longer bracket for support than a straight portion of the barrier means. An external corner of the barrier means may require a longer bracket for support than an internal corner as the barrier must extend both over and away from an upright.

FIGs 9 to 11 illustrate examples in which the bracket assembly is positioned on an internal corner. In these FIGs, two brackets are attached directly to their respective uprights (not illustrated in FIG 11), and the third bracket is attached to its respective upright via an alignment adaptor, and is thus positioned at an angle to the upright. The bracket therefore provides support for barrier means along the straight sides of the enclosure as well as in the corner of the enclosure.

FIG 12 illustrates an example in which the bracket assembly is positioned on an external corner. In this FIG, two brackets are attached directly to their respective uprights (not illustrated), and the third bracket is attached to its respective upright via an alignment adaptor, and is thus positioned at an angle to the upright. The bracket therefore provides support for barrier means along the straight sides of the enclosure as well as in the corner of the enclosure.

In such examples, the alignment adaptor may rotate the bracket assembly and the extender may extend the assembly such that sufficient support for the barrier means is provided.

There is therefore provided an animal containment system 500 which inhibits movement of a domestic animal out of an enclosure.

Providing a standard bracket in combination with the extender and the alignment adaptor therefore enables provision of an animal containment system using a small number of standardized items; in other words, a modular animal containment system. This provides for simplified installation. The amount of material required for providing an animal containment system is thus also reduced.

There is thus provided an extender 100 for a barrier portion of a bracket 200, the bracket 200 comprising a mounting portion 201 and a barrier portion 202, the barrier portion 202 being inclined relative to the mounting portion 201 wherein the extender 100 comprises an elongate planar face 101 having a length measured in a first direction x and a width measured in a second direction y perpendicular to the first direction x wherein the elongate planar face 101 has a perimeter having two opposing long edges and two opposing short edges, a wall 102 upstanding from the planar face 101 in a third direction z perpendicular to the first direction x and the second direction y, extending along the two long edges and one of the two short edges wherein the wall 102 has a perimeter having two opposing long edges and one short edge, first constraints 104 comprising a plurality of tabs which extend from the long edges of the wall 102 parallel to the elongate planar face 101 and a second constraint 105 comprising a tab which extends from the planar face 101 in the third direction z, wherein the two opposing long edges of the wall 102, the planar face 101 and the first constraints 104 are mutually arranged to slidingly receive and constrain the barrier portion 202 between the two opposing long edges of the wall 102, the planar face 101 and the first constraints 104 and wherein the second constraint 105 is positioned to abut an end of the barrier portion 202 distal from the mounting portion 201 when the barrier portion 202 is slidingly received between the two opposing long edges of the wall 102, the planar face 101 and the first constraints 104, and wherein a portion 106 of the planar face101 extends beyond the end of the barrier portion 202.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance the Applicant may seek protection via the claims in respect of any patentable feature or combination of features hereinbefore referred to and/or shown in the drawings whether or not emphasis has been placed thereon.

## Claims

1. An extender for a barrier portion of a bracket, the bracket comprising a mounting portion and the barrier portion, the barrier portion being inclined relative to the mounting portion, wherein the extender comprises:
an elongate planar face having a length measured in a first direction and a width measured in a second direction perpendicular to the first direction, wherein the elongate planar face has a perimeter having two opposing long edges and two opposing short edges;
a wall, upstanding from the planar face in a third direction perpendicular to the first direction and the second direction, extending along the two long edges and one of the two short edges, wherein the wall has a perimeter having two opposing long edges and one short edge;
first constraints comprising a plurality of tabs which extend from the long edges of the wall parallel to the elongate planar face; and
a second constraint comprising a tab which extends from the planar face in the third direction,
wherein the two opposing long edges of the wall, the planar face and the first constraints are mutually arranged to slidingly receive and constrain the barrier portion between the two opposing long edges of the wall, the planar face and the first constraints, and wherein the second constraint is positioned to abut an end of the barrier portion, distal from the mounting portion when the barrier portion is slidingly received between the two opposing long edges of the wall, the planar face and the first constraints,
wherein a portion of the planar face extends beyond the end of the barrier portion.

2. An extender as claimed in claim 1, wherein the extender is formed from folded steel sheet.

3. A bracket assembly comprising the extender of any of claims 1 or 2 and a bracket, wherein the bracket comprises a mounting portion and a barrier portion, the barrier portion being inclined relative to the mounting portion.

4. A bracket assembly as claimed in claim 3, wherein the bracket is configured to be attached to an upright or to an engagement face of an alignment adaptor.

5. A bracket assembly as claimed in claim 3 or claim 4, wherein the bracket comprises an elongate member.

6. A bracket assembly as claimed in claim 5, wherein the mounting portion and the barrier portion are formed as a single part.

7. A bracket assembly as claimed in any of claims 3 to 6, wherein the mounting portion comprises attachment holes through which fastening means can extend, the attachment holes positioned on a centre line of the mounting portion.

8. A bracket assembly as claimed in any of claims 3 to 7, wherein the barrier portion of the bracket comprises:
a middle section extending from the mounting portion in a direction away from the upright or the engagement face; and
an outer section extending from the middle section in a direction substantially perpendicular to the upright or the engagement face,
such that the outer section is slidingly locatable between the wall, the planar face and the first attachment means of the extender and an end of the outer section, distal from the middle section, engages the second attachment means of the extender.

9. A bracket assembly as claimed in any of claims 3 to 8, wherein the bracket is formed from steel coil.

10. A bracket assembly as claimed in any of claims 3 to 9, further comprising an alignment adaptor, wherein:
the alignment adaptor comprises a mounting surface engageable against a surface of an upright and a flat engagement face inclined relative to the mounting surface; and
the bracket is configured to be attached to the engagement face of the alignment adaptor, such that the mounting portion is inclined relative to the fence post surface,
rotationally about a vertical axis, the angle of rotation being in the plane perpendicular to the vertical axis.

11. A bracket assembly as claimed in any of claims 4 to 10, wherein the upright is a fence post or wall.

12. An animal containment system comprising at least two bracket assemblies as claimed in any of claims 3 to 11.

13. An animal containment system as claimed in claim 12, wherein the respective bracket assemblies are configured to be attached to respective peripheral uprights of an enclosure.

14. An animal containment system as claimed in claim 13, further comprising barrier means extending between the respective extenders, and, optionally, wherein the barrier means extend beyond at least one of the at least two bracket assemblies, and, optionally, wherein the barrier means comprise a mesh.

15. An animal containment system as claimed in claim 14, wherein the extenders comprise third attachment means for attaching the barrier means.
